# EUROPÄISCHE PATENTSCHRIFT

(11) **EP 3 180 531 B1**
(45) Veröffentlichungstag und Bekanntmachung des Hinweises auf die Patenterteilung: **27.06.2018**
(21) Anmeldenummer: 15757121.7
(22) Anmeldetag: 23.07.2015
(51) Int. Cl.: F16D 13/70, F16D 21/06

(54) **DOPPELKUPPLUNG MIT IN UMFANGSRICHTUNG AUSGERICHTETER UND AXIAL ABSTEHENDER LASCHE EINER GEGENDRUCKPLATTE**
DUAL CLUTCH COMPRISING AN AXIALLY-PROJECTING COUNTER-PRESSURE PLATE LUG ORIENTED IN THE CIRCUMFERENTIAL DIRECTION
DOUBLE EMBRAYAGE POURVU D'UN COLLIER DE PLATEAU DE RÉACTION EN SAILLIE AXIALE, ORIENTÉ DE MANIÈRE PÉRIPHÉRIQUE

(30) Priorität: 11.08.2014 DE 102014215884
(43) Veröffentlichungstag der Anmeldung: 21.06.2017
(73) Patentinhaber: Schaeffler Technologies AG & Co. KG, 91074 Herzogenaurach (DE)
(72) Erfinder: MICHELBACH, Thomas, 79108 Freiburg (DE)
(86) Internationale Anmeldenummer: PCT/DE2015/200416
(87) Internationale Veröffentlichungsnummer: WO 2016/023548

(56) Entgegenhaltungen:
- WO-A1-2011/116742
- DE-A1-102011 104 243
- DE-T2-602004 009 042

## Beschreibung

Die Erfindung betrifft eine Doppelkupplung für ein Kraftfahrzeug, mit einer motorseitig angeordneten ersten Teilkupplung und einer getriebeseitig angeordneten zweiten Teilkupplung, wobei die erste Teilkupplung eine erste Anpressplatte aufweist, die zum Einklemmen einer Reibscheibe auf eine erste Gegendruckplatte zu bewegbar ist, wobei die zweite Teilkupplung eine zweite Anpressplatte aufweist, die zum Einklemmen einer Reibscheibe auf eine zweite Gegendruckplatte zu bewegbar ist, wobei die erste Gegendruckplatte drehfest mit der zweiten Gegendruckplatte verbunden ist.

Aus dem Stand der Technik, etwa der EP 1 524 446 B1 oder der WO 2011/116742, ist eine ähnliche Doppelkupplung bekannt, die dort als Kupplungsaggregat vorgestellt wird. Das Kupplungsaggregat soll wenigstens zwei Reibungskupplungen enthalten, die jeweils mindestens eine Kupplungsscheibe aufweisen, wobei die beiden Kupplungsscheiben mit einer eigenen anzutreibenden Welle verbindbar sind und die beiden Kupplungen unabhängig voneinander über jeweils einen Betätigungsmechanismus ein- und ausrückbar sind, wobei die Schließkraft der Kupplungen unmittelbar von den Betätigungsmechanismen aufgebracht wird. Als besonders ist dabei herausgestellt, dass die Kombination bestimmter Merkmale vorliegt, nämlich, dass beide Kupplungen jeweils von einer ringförmig ausgebildeten Kolben-Zylinder-Einheit der Betätigungsmechanismen betätigbar sind, dass die Kolben-Zylinder-Einheiten koaxial und zumindest teilweise axial ineinander geschachtelt sind und ferner, dass zur Übertragung der Anpresskraft zwischen der jeweiligen Anpressplatte einer Kupplung und dem im zugehörigen Betätigungsmechanismus ein topf- oder tellerförmiges, praktisch starres Zwischenelement vorgesehen ist.

Üblicherweise werden die beiden Gegenplatten, wenn sie miteinander drehfest verbunden werden, über Stufenbolzen aneinander angebracht. Dies ist beispielsweise auch in einer älteren Anmeldung, nämlich der DE 10 2014 205 773.6, die bisher noch nicht veröffentlicht ist, dargestellt. Als Nachteil hat sich aber bei solchen Lösungen herausgestellt, dass zusätzliche Montageschritte notwendig sind, zusätzlich Bauteile eingebracht werden müssen bzw. verwendet werden müssen, und Eingrabungen bei einer Vernietung in die benachbarten Blechplatten zu beklagen sind.

Der grundsätzliche Aufbau und die Wirkbeziehungen, wie sie aus den beiden älteren Druckschriften bekannt sind, sollen als hier integriert gelten.

Allerdings ist es die Aufgabe der vorliegenden Erfindung, eine Verbesserung bei Doppelkupplungen zu bewirken, insbesondere eine Kosteneinsparung und eine schnellere Montage zu ermöglichen. Die Nachteile aus dem Stand der Technik sollen auch vermieden werden. Blechplattenartige Gegendruckplatten sollen bei Einhaltung eines entsprechenden Abstandes aneinander befestigbar sein.

Diese Aufgabe wird erfindungsgemäß dadurch gelöst, dass wenigstens eine der Gegendruckplatten eine der Umfangsrichtung folgende Lasche ausbildet, die axial abstehend einen Befestigungsbereich mit der anderen Gegendruckplatte vorgibt.

Auf diese Weise können kostengünstige Stanzprozesse eingesetzt werden und in Abhängigkeit des jeweiligen Doppelkupplungstyps der Axialversatz, also das axiale Abstehen der Lasche eingestellt/vordefiniert werden. Dies ist besonders kostengünstig und zeiteffizient. Auf Gussteile kann dabei verzichtet werden und es können dann belastbare und kostengünstige Blechbauteile eingesetzt werden.

Natürlich ist es auch von Vorteil, wenn pro Gegendruckplatte mehrere gleichartig oder ähnlich ausgebildete Laschen vorhanden sind.

Vorteilhafte Ausführungsformen sind auch in den Unteransprüchen beansprucht und werden nachfolgend näher erläutert.

So ist es beispielsweise von Vorteil, wenn beide Gegendruckplatten in Umfangsrichtung folgende Laschen aufweisen, die beide wenigstens abschnittsweise axial aufeinander zu bzw. axial von der jeweiligen Gegendruckplatte weg, deren integrale Bestandteile sie sind, abstehen. Im Endbereich ist eine Parallelität zum Hauptkörper der Gegendruckplatte wünschenswert, also eine Ausrichtung orthogonal zur Längsachse der Kupplung. Der axiale Versatz, der durch die Lasche jeweils gebildet wird, kann dann gering gehalten werden, was die Spannungen in der Gegendruckplatte, insbesondere im Bereich der Lasche, im Betriebsfall reduziert. Eine hohe Lebenserwartung ist die Folge.

Für ein präzises Verbauen ist es vorteilhaft, wenn die Lasche der ersten Gegendruckplatte mit der Lasche der zweiten Gegendruckplatte in direktem Kontakt steht.

Es ist auch von Vorteil, wenn im Befestigungsbereich ein Bolzen oder Niet eingesetzt ist oder zusätzlich oder alternativ eine Schraube zum kraftschlüssigen Verbinden vorhanden ist. Natürlich kann auch über den Umfang gesehen abwechselnd ein Bolzen/Niet und eine Schraube eingesetzt sein. Das Abwechseln kann regelmäßig oder unregelmäßig erfolgen.

Es ist zweckmäßig, wenn die Laschen in dieselbe Umfangsrichtung weisend ein freies Ende besitzen, da die Gegendruckplatten dann im Bereich der jeweiligen Befestigungsbereiche einfach aneinander positionierbar und festlegbar sind.

Natürlich ist es auch möglich, dass immer abwechselnd die Laschen in umgekehrte Umfangsrichtungen weisen, entweder pro Gegendruckplatte, oder über beide Gegendruckplatten hinweg gesehen.

Wenn die Laschen spiegelsymmetrisch zu einer Transversalebene, insbesondere auf der eine in Axialrichtung verlaufende Längsachse exakt senkrecht steht, ausgebildet sind, so ist die Verwendung von Gleichteilen in der Doppelkupplung erleichtert.

Konventionelle Niete zur Kostenreduktion lassen sich einsetzen, wenn der Niet (nur) einen stufenlosen zylindrischen Stiftabschnitt aufweist, an den sich an einem Ende eine Vergrößerung, etwa nach Art eines Pilzkopfes oder einer Kappe, anschließt.

Für die Fertigung ist es von Vorteil, wenn die Lasche auf der geblechten Gegendruckplatte durch einen Tiefzieh-, Stanz- und/oder Kaltumformprozess ausgeformt ist. Alternativ ist es natürlich auch möglich, dass die Lasche aus einem Gussabschnitt einer aus Gussmaterial geformten Gegendruckplatte besteht.

Für die Aktivierung ist es von Vorteil, wenn die erste oder zweite Anpressplatte mit einem relativ steifen und/oder unverbiegbaren Drucktopf verbunden ist.

Die Erfindung betrifft auch einen Antriebsstrang eines Kraftfahrzeuges, wie eines PKWs, eines LKWs oder eines sonstigen Nutzfahrzeuges, mit einer Doppelkupplung / Mehrscheibenkupplung der erfindungsgemäßen Art.

Man könnte auch sagen, dass für eine Weiterentwicklung einer trockenen, direkt betätigten Doppelkupplung vorgeschlagen wird, die aus Blech gefertigten Gegendruckplatten einer motorseitigen K1-Teilkupplung und einer getriebeseitigen K2-Teilkupplung mittels in Umfangsrichtung verlaufender Laschenabschnitte, die in axialer Richtung paarweise aufeinander zu aufgestellt sind, drehfest miteinander zu verbinden.

Die jeweiligen Laschenabschnitte der K1 sind in Richtung der K2 aufgestellt, und die gegenüberliegenden Laschenabschnitte der K2 sind (spiegelbildlich) in Richtung der K1 aufgestellt. Beide gegenüberliegenden Laschenabschnitte können mittels eines konventionellen Niets miteinander verbunden werden.

Die Erfindung wird nachfolgend mit Hilfe einer Zeichnung näher erläutert. Dabei ist ein erstes Ausführungsbeispiel dargestellt. Es zeigen:
- Fig. 1: einen Längsschnitt durch einen Abschnitt einer erfindungsgemäßen Doppelkupplung mit motorseitig angebrachtem Schwungrad,
- Fig. 2: eine Draufsicht quer zur Längsachse auf den Bereich von über Laschen miteinander verbundenen Gegendruckplatten, und
- Fig. 3: eine Frontansicht in Richtung der Längsachse, auf einen Abschnitt einer der beiden Gegendruckplatten mit dort in Umfangsrichtung verlaufender, aber axial abstehender Lasche.

Die Figuren sind lediglich schematischer Natur und dienen ausschließlich dem Verständnis der Erfindung. Die gleichen Elemente sind mit denselben Bezugszeichen versehen.

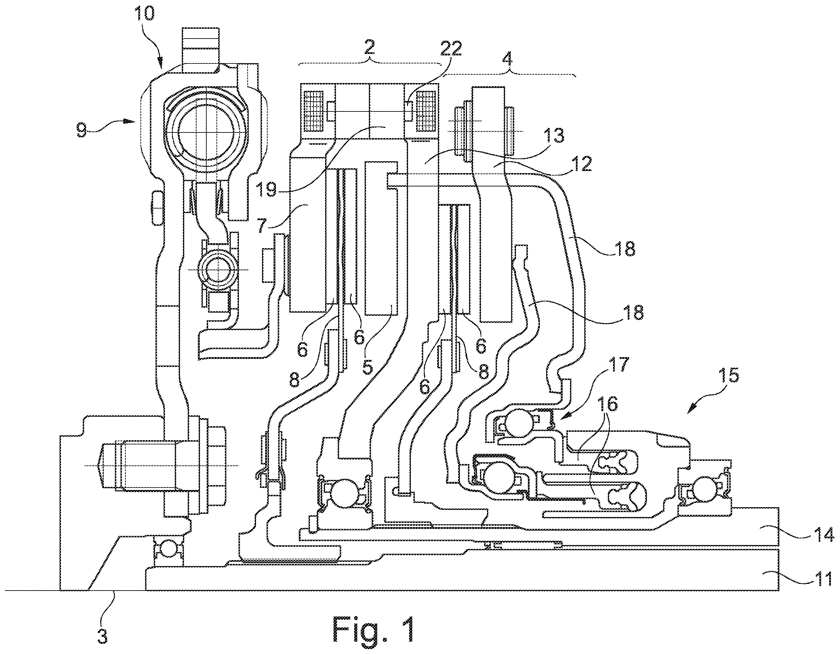

In Fig. 1 ist eine erfindungsgemäße Doppelkupplung 1 für ein Kraftfahrzeug dargestellt. Ein solches Kraftfahrzeug kann eine Verbrennungskraftmaschine beinhalten und als PKW, LKW, Bus oder ähnliches ausgebildet sein. Es ist eine erste motorseitig angeordnete Teilkupplung 2 vorhanden, an die sich in Axialrichtung, welche durch eine Längsachse 3 vorgegeben ist, eine zweite Teilkupplung in Richtung eines nicht dargestellten Getriebes anschließt.

Die erste Teilkupplung 2 weist eine erste Anpressplatte 5, zumindest eine Reibscheibe 6 und eine erste Gegendruckplatte 7 auf. Es sind sogar zwei Reibscheiben 6 vorhanden, die an einer Kupplungsscheibe 8 befestigt sind.

Die erste Anpressplatte 5 ist axial auf die erste Gegendruckplatte 7 zu bewegbar, um die beiden Reibscheiben 6 einzuklemmen. Dadurch kann dann von einem Schwungrad 9, unter Nutzung eines Dämpfers 10 Drehmoment auf eine innere Getriebeeingangswelle 11 verbracht werden.

Die zweite Teilkupplung 4 weist unter anderem eine zweite Anpressplatte 12 und eine zweite Gegendruckplatte 13 auf. Auch die zweite Anpressplatte 12 ist axial bewegbar angeordnet, um eine Reibscheibe 6 an der zweiten Gegendruckplatte 13 festzuklemmen. In diesem Fall wird dann Drehmoment von dem Schwungrad 9 auf eine äußere Getriebeeingangswelle 14 verbracht.

Die Aktivierung der ersten Teilkupplung 2 und/oder der zweiten Teilkupplung 4 erfolgt über einen Aktor 15, der nach Art eines CSC (concentric slave cylinder) ausgestaltet ist. Kolben 16 drücken dann selektiv auf Einrücklager 17. Die Einrücklager 17 ihrerseits (selektiv) leiten Druck auf Drucktöpfe 18 weiter.

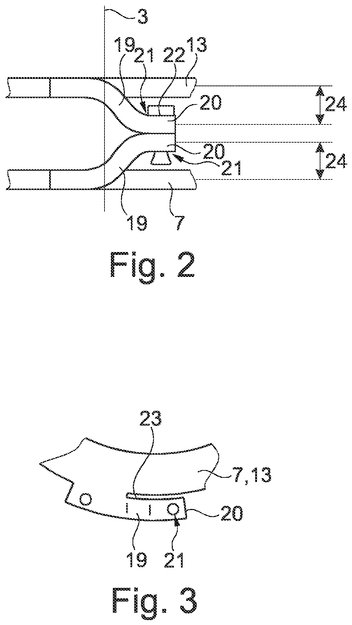

Beide Gegendruckplatten 7 und 13 weisen Laschen 19 auf, wie sie besonders gut in den Figuren 2 und 3 zu erkennen sind.

Die Laschen 19 sind integrale Bestandteile jeweils der ersten Gegendruckplatte 7 und der zweiten Gegendruckplatte 13. An einem freien Ende 20 ist jeweils ein Befestigungsbereich 21 definiert/ausgebildet. Im Befestigungsbereich 21 ist ein Loch, nämlich ein Durchgangsloch vorhanden, in den ein Niet, wie in den Figuren 1 und 2 zu erkennen, eingesetzt ist. Der Niet ist mit dem Bezugszeichen 22 versehen. Der Niet 22 kann ein konventioneller Niet mit Pilzkopf sein und ansonsten stufenlosem, zylindrischem Stängel/Stift.

In Zusammenschau der Figuren 2 und 3 ist gut zu erkennen, dass die Gegendruckplatten 7 und 13 im Bereich der jeweiligen Laschen 19 vergleichbar ausgestaltet sind, nämlich derart, dass die Laschen 19 einer (einzigen) Umfangsrichtung folgen, also einen Schlitz 23 ausbilden und zusätzlich axial zur restlichen Gegendruckplatte, insbesondere zu derem Hauptbereich, um den Weg/Abstand 24 abstehen/distanziert sind.

### Bezugszeichenliste

- 1: Doppelkupplung
- 2: erste Teilkupplung
- 3: Längsachse
- 4: zweite Teilkupplung
- 5: erste Anpressplatte
- 6: Reibscheibe
- 7: erste Gegendruckplatte
- 8: Kupplungsscheibe
- 9: Schwungrad
- 10: Dämpfer
- 11: innere Getriebeeingangswelle
- 12: zweite Anpressplatte
- 13: zweite Gegendruckplatte
- 14: äußere Getriebeeingangswelle
- 15: Aktor
- 16: Kolben
- 17: Einrücklager
- 18: Drucktopf
- 19: Lasche
- 20: freies Ende
- 21: Befestigungsbereich
- 22: Niet
- 23: Schlitz
- 24: axialer Abstand / Weg

## Patentansprüche

1. Doppelkupplung (1) für ein Kraftfahrzeug, mit einer motorseitig angeordneten ersten Teilkupplung (2) und einer getriebeseitig angeordneten zweiten Teilkupplung (4), wobei die erste Teilkupplung (2) eine erste Anpressplatte (5) aufweist, die zum Einklemmen einer Reibscheibe (6) auf eine erste Gegendruckplatte (7) zu bewegbar ist, wobei die zweite Teilkupplung (4) eine zweite Anpressplatte (12) aufweist, die zum Einklemmen einer Reibscheibe (6) auf eine zweite Gegendruckplatte (13) zu bewegbar ist, wobei die erste Gegendruckplatte (7) drehfest mit der zweiten Gegendruckplatte (13) verbunden ist, **dadurch gekennzeichnet, dass** wenigstens eine der Gegendruckplatten (7, 13) eine der Umfangsrichtung folgende Lasche (19) ausbildet, die axial abstehend einen Befestigungsbereich (21) mit der anderen Gegendruckplatte (13, 7) vorgibt.

2. Doppelkupplung (1) nach Anspruch 1, **dadurch gekennzeichnet, dass** beide Gegendruckplatten (7 und 13) in Umfangsrichtung folgende Laschen (19) aufweisen, die beide axial aufeinander zu axial von der jeweiligen Gegendruckplatte (7, 13), deren integrale Bestandteile sind, abstehen.

3. Doppelkupplung (1) nach Anspruch 2, **dadurch gekennzeichnet, dass** die Lasche (19) der ersten Gegendruckplatte (7) mit der Lasche (19) der zweiten Gegendruckplatte (13) in direktem Kontakt steht.

4. Doppelkupplung (1) nach einem der Ansprüche 1 bis 3, **dadurch gekennzeichnet, dass** im Befestigungsbereich (21) ein Bolzen oder Niet (22) eingesetzt ist.

5. Doppelkupplung (1) nach einem der Ansprüche 2 bis 4, **dadurch gekennzeichnet, dass** die Lasche (19) in dieselbe Umfangsrichtung weisend ein freies Ende (20) besitzen.

6. Doppelkupplung (1) nach einem der Ansprüche 2 bis 5, **dadurch gekennzeichnet, dass** die Lasche (19) spiegelsymmetrisch zu einer Transversalebene ausgebildet sind.

7. Doppelkupplung (1) nach einem der Ansprüche 4 bis 6, **dadurch gekennzeichnet, dass** der Niet (22) einen stufenlosen zylindrischen Stiftabschnitt aufweist, an dem sich an einem Ende eine Vergrößerung anschließt.

8. Doppelkupplung (1) nach einem der Ansprüche 1 bis 7, **dadurch gekennzeichnet, dass** die Lasche (19) aus der geblechten Gegendruckplatte (7, 13) durch einen Tiefzieh-, Stanz- und/oder Kaltumformprozess ausgeformt ist.

9. Doppelkupplung (1) nach einem der Ansprüche 1 bis 8, **dadurch gekennzeichnet, dass** die erste oder zweite Anpressplatte (5, 12) mit einem Drucktopf (18) verbunden ist.

10. Antriebsstrang eines Kraftfahrzeugs mit einer Doppelkupplung (1) nach einem der Ansprüche 1 bis 9.

## Claims

1. Double clutch (1) for a motor vehicle, having a first component clutch (2) arranged at an engine side and having a second component clutch (4) arranged at a transmission side, wherein the first component clutch (2) has a first pressure plate (5) which is movable toward a first counterpressure plate (7) in order to clamp a friction disc (6), wherein the second component clutch (4) has a second pressure plate (12) which is movable toward a second counterpressure plate (13) in order to clamp a friction disc (6), wherein the first counterpressure plate (7) is connected rotationally conjointly to the second counterpressure plate (13), **characterized in that** at least one of the counterpressure plates (7, 13) forms a lug (19) which follows the circumferential direction and which, in an axially projecting manner, forms a fastening region (21) to the other counterpressure plate (13, 7).

2. Double clutch (1) according to Claim 1, **characterized in that** both counterpressure plates (7 and 13) have lugs (19) which follow the circumferential direction and which both project axially toward one another from the respective counterpressure plate (7, 13), of which they are integral constituent parts.

3. Double clutch (1) according to Claim 2, **characterized in that** the lug (19) of the first counterpressure plate (7) is in direct contact with the lug (19) of the second counterpressure plate (13).

4. Double clutch (1) according to one of Claims 1 to 3, **characterized in that** a bolt or rivet (22) is inserted in the fastening region (21).

5. Double clutch (1) according to one of Claims 2 to 4, **characterized in that** the lugs (19) have a free end (20) pointing in the same circumferential direction.

6. Double clutch (1) according to one of Claims 2 to 5, **characterized in that** the lugs (19) are formed mirror-symmetrically with respect to a transverse plane.

7. Double clutch (1) according to one of Claims 4 to 6, **characterized in that** the rivet (22) has a stepless cylindrical pin section which is adjoined, at one end, by an enlarged portion.

8. Double clutch (1) according to one of Claims 1 to 7, **characterized in that** the lug (19) is formed out of the sheet-metal counterpressure plate (7, 13) by means of a deep-drawing, punching and/or cold working process.

9. Double clutch (1) according to one of Claims 1 to 8, **characterized in that** the first or second pressure plate (5, 12) is connected to a pressure pot (18).

10. Drive train of a motor vehicle, having a double clutch (1) according to one of Claims 1 to 9.

## Revendications

1. Double embrayage (1) pour un véhicule automobile, comprenant un premier embrayage partiel (2) disposé du côté du moteur et un deuxième embrayage partiel (4) disposé du côté de la transmission, le premier embrayage partiel (2) présentant une première plaque de pressage (5) qui peut être déplacée vers une première plaque de pression conjuguée (7) pour serrer un disque de friction (6), le deuxième embrayage partiel (4) présentant une deuxième plaque de pressage (12) qui peut être déplacée vers une deuxième plaque de pression conjuguée (13) pour serrer un disque de friction (6), la première plaque de pression conjuguée (7) étant connectée de manière solidaire en rotation à la deuxième plaque de pression conjuguée (13), **caractérisé en ce qu'**au moins l'une des plaques de pression conjuguée (7, 13) constitue une patte (19) suivant la direction périphérique, laquelle, saillant axialement, prédéfinit une zone de fixation (21) avec l'autre plaque de pression conjuguée (13, 7).

2. Double embrayage (1) selon la revendication 1, **caractérisé en ce que** les deux plaques de pression conjuguées (7 et 13) présentent des pattes (19) suivantes dans la direction périphérique, qui font toutes deux saillie axialement l'une vers l'autre axialement depuis la plaque de pression conjuguée respective (7, 13) de laquelle elles font partie intégrante.

3. Double embrayage (1) selon la revendication 2, **caractérisé en ce que** la pâte (19) de la première plaque de pression conjuguée (7) est en contact direct avec la patte (19) de la deuxième plaque de pression conjuguée (13).

4. Double embrayage (1) selon l'une quelconque des revendications 1 à 3, **caractérisé en ce qu'**un boulon ou un rivet (22) est inséré dans la région de fixation (21).

5. Double embrayage (1) selon l'une quelconque des revendications 2 à 4, **caractérisé en ce que** les pattes (19) possèdent une extrémité libre (20) tournée dans la même direction périphérique.

6. Double embrayage (1) selon l'une quelconque des revendications 2 à 5, **caractérisé en ce que** les pattes (19) sont réalisées avec une symétrie spéculaire par rapport à un plan transversal.

7. Double embrayage (1) selon l'une quelconque des revendications 4 à 6, **caractérisé en ce que** le rivet (22) présente une portion de goupille cylindrique continue à laquelle se raccorde un grossissement à une extrémité.

8. Double embrayage (1) selon l'une quelconque des revendications 1 à 7, **caractérisé en ce que** la patte (19) constituée de la plaque de pression conjuguée en tôle (7, 13) est formée par un processus d'emboutissage profond, d'estampage et/ou de façonnage à froid.

9. Double embrayage (1) selon l'une quelconque des revendications 1 à 8, **caractérisé en ce que** la première ou la deuxième plaque de pressage (5, 12) est connectée à un pot de pression (18).

10. Chaîne cinématique d'un véhicule automobile comprenant un double embrayage (1) selon l'une quelconque des revendications 1 à 9.
